# EUROPEAN PATENT SPECIFICATION

(11) **EP 0 361 976 B1**
(45) Date of publication and mention of the grant of the patent: **19.07.1995**
(21) Application number: 89310020.6
(22) Date of filing: 29.09.1989
(51) Int. Cl.: A61C 1/08

(54) **Miniature hand-held spot source of illumination**
Handgehaltene Miniatur-Spot-Beleuchtung
Source de lumière miniature tenue à la main

(30) Priority: 30.09.1988 US 252041
(43) Date of publication of application: 04.04.1990
(73) Proprietor: DEN-TAL-EZ, INC., Audubon, Pennsylvania 19407 (US)
(72) Inventor: Gonser, Donald I., Lancaster, PA. 17602 (US); Reinhart, Douglas M., Lancaster, PA. 17601 (US)
(74) Representative: Newby, John Ross

(56) References cited:
- EP-A- 0 075 800
- EP-A- 0 147 821
- DE-A- 2 023 625
- FR-A- 2 340 506

## Description

The present invention relates to miniature hand-held spot sources of illumination, and more particularly to such types of illumination as are useful by health professionals to observe and operate on patients.

The modern dental surgery may be provided with as many as four different sources of illumination. These may include a window transmitting light from outdoors, an overhead generalised source of illumination, a directable source of illumination, and a hand-held spot source of illumination which may, and generally is combined with a dental handpiece mounting a drill or burr. The directable source of illumination is provided for the purpose of generally illuminating the oral cavity, as may be desired. An example of a directable light source is disclosed in US-A-4,608,622.

Miniature hand-held spot sources of illumination are generally incorporated in a handle of a hand-held dental instrument. One or more light beams are projected laterally of the handle from the distal end portion thereof onto the drill or burr. Light from a lamp in the handle is transmitted to light beam projectors via an optical light path of conventional construction. An air supply for a turbine driving the drill or burr can be routed through the handle alongside the optical light path.

In approximately 90% of the dental surgeries (operatories) in the United States, the directable source of illumination is provided by a tungsten halogen lamp which produces a light having a yellow-hue. This quality of light is not as desirable as either sunlight or light which has been colour corrected such as in the manner disclosed in the aforementioned patent. A major reason for this is that yellow-red light blurs the distinctions between various internal layers of a tooth, such as between the enamel and dentin. In addition, in the diagnosis of gum diseases, variations in colour of tissue can be important, and such variations are less distinct under a source of illumination having a yellowish hue.

To compensate for what is perceived as a lower level of illumination, some health professionals often resort to increasing the intensity of the illumination to enable them to observe the anatomical distinctions noted above. This approach, however, is not in the long term best interest of the health professional because it may lead to eye damage. The reasons for this may best be explained in the context of the physiology of the eye.

Structurally, the eye comprises a cornea, a lens and a chamber which is filled with a gelatinous, vitreous humor behind which lies the retina. The retina is composed of nerve fibres known as rods and cones. The cones are responsive to colours, but they are relatively insensitive to low intensities of light so that colour cannot be distinguished readily at such low intensities, i.e. twilight vision. The rods, however, are more sensitive to light because they contain a light-sensitive substance, but they cannot transmit colour sensation.

A network of fine fibres connected to the retina transmit sensory impression through the optic nerve to the brain. Perception of colour by the brain is not instantaneous. For example, blue sensations of light are perceived more quickly, and green sensations less quickly.

In the eye, the highest visual acuity occurs in one small central area in the retina known as the fovea centralis. The fovea is the centre of a larger, specialised region known as the macula lutea (yellow spot). There is a depression in the retina known as the fovea depression in which many of the retinal layers are reduced in thickness. It is termed the foveal pit. The foveal pit contains the highest concentration of cone receptors which are responsible, not only for colour vision, but also for vision of increased acuity.

The cones are packed tightly in the fovea. For instance, in the 100 micrometre diameter of central fovea, there are approximately 7,000 cones. In contrast, there are approximately 100,000 cones in the entire rod-free region, and there are over 4 million cones in the macula. In the peripheral portions of the retina outside the macula, the receptors include mostly rods. In the entire retina, there are approximately 7 million cones and 125 million rods which feed into approximately one million nerve fibres contained in the optic nerve.

There are psychophysical and psychological aspects involved in colour perception. For instance, there are three types of cones that are sensitive to the three additive primary colours: red, blue and green which compose so-called white light. Light energy is converted into chemical energy through the mechanism of the visual pigments. When the eye is focused on a coloured object, the visual pigments are depleted, and if they are depleted faster than they can be regenerated, colour discrimination is lost. It is important, therefore, for good long-term eye health that colours be viewed under a perfectly balanced light source which activates all of the specialised cones and minimises the colour pigment depletion problem. This enables visual acuity and colour discrimination to be maintained over a longer period of time.

It is known that sunlight contains a full spectrum of visible light of various wavelengths, including the primary additive colours red, blue and green. So-called white light artificial illumination, to be comparable to sunlight, should also contain a proper balance of light waves.

Systems have been devised for comparing the quality of light provided by artificial sources of illumination. Such a system includes reference to the term correlated colour temperature (CCT). Correlated colour temperature is the colour temperature of a source of illumination which is equal to the temperature of a black body radiator heated to the temperature (in degrees Kelvin) necessary to produce that colour. During heating, the black body undergoes a series of progressive colour changes. For instance, initially, it glows red, then glows orange, yellow, white and finally blue respectively. Since an artificial light source does not actually generate the same thermal temperature as those corresponding to a black body possessing a particular colour, the term correlated colour temperature has been developed. For example, a candle glows at a correlated colour temperature of 2,000 degrees Kelvin; a tungsten-halogen lamp glows at a correlated colour temperature of about 3,200 degrees Kelvin; and a slightly overcast sky has a correlated colour temperature in a range of about 5,500 to about 6,000 degrees Kelvin.

A properly balanced white light is characterised by the absence of hues. A system has been developed for quantifying the quality of light. This system includes a so-called colour rendering index (CRI) and may be found in an algebraically derived chromaticity diagram. There is a point on the diagram representing a perfect balance of the various components of light, and this is referred to as an equal energy point. It is given a colour rendering index of 100. Light with various hues, i.e. a red hue, a blue hue, etc. are charted at other locations on the chromaticity diagram. Hued light has a colour rendering index of less than 100, depending on its distance from that point on the diagram. It has been determined that the highest efficiency of eye response in the dental surgery for the examination of anatomical structures of teeth and gingiva occurs when the colour rendering index of the light used for examination purposes is 90 or greater.

While the quality of light required for anatomical examination purposes as described above is important, the quantity of light is also important. A dental surgery, for example, should have ambient lighting of at least about 1615 lux (lumen/m²) or 150 footcandles (fc.). The source of illumination for the oral cavity, i.e. the directable source of illumination, should not have an intensity which exceeds about ten times that of the ambient light level (or about 1,500 fc.). Preferably, the ratio between the ambient lighting in the dental surgery and the directable source of illumination is about three to one, and the corresponding ratio between the surgery ambient light and spot illumination in the oral cavity is about two to one, i.e. about 1600 lux ambient lighting, 4850 lux (450 fc.) directable surgery lighting, and 9700 lux (900 fc.) for intracavity spot illumination. The levels of illumination may, of course, vary from these depending upon the particular preferences of the health professional. For the best long-term eye health of the professional, of course, it is highly desirable to minimise light intensity without compromising observability.

In addition to quality and quantity of light, contrast is important in the oral cavity. For example, the typical directable dental surgery light provides illumination in the oral cavity in a colour correlated temperature range of between about 2,900 and 3,800 degrees Kelvin which is the colour temperature of the tungsten halogen lamp source. Approximately 90% of all such sources of illumination installed in the United States provide a yellowish illumination characteristic of such a source. Spot illumination from the dental handpiece of the same correlated colour temperature tends to blend with the overall oral cavity illumination, and this is undesirable. When, however, the correlated colour temperature of the spot source is about 5,500 degrees Kelvin, good contrast is provided.

With the foregoing in mind, a primary aim of the present invention is to provide an improved miniature hand-held spot source of illumination which is particularly suited for use by health professionals to observe anatomical structures.

A further aim of the invention is to provide a novel method and apparatus for ameliorating long term eye damage to dental health professionals.

As yet another aim, the invention provides an efficient method and apparatus for spot illuminating anatomical structures in a manner which minimises light intensity without adversely affecting observability.

A still further aim of the invention is to provide a dental handpiece having a colour corrected light source operable to enhance the illumination of surfaces in the oral cavity.

What constitutes the invention is defined in the following claims 1 and 11 which are distinguished from the disclosures of EP-A-0147821 (which relates to an ambient light source for a dental surgery) and EP-A-0075800 (which relates to a hand held illuminator) by the characterising clauses thereof.

A preferred embodiment of instrument comprises an elongate handle within which is mounted a source of illumination that is transmitted via an optical path to one or more light beams projecting from a proximal end of the handle. Desirably, the light beams are cast onto a tool (e.g. a drill or burr) rotatably mounted at the proximal end of the handle. An optical filter preferably of the interference type is interposed in the light path in the handle for causing the correlated colour temperature of the light beams to be about 2,000 degrees Kelvin different from the colour temperature of the light source. Preferably, the correlated colour temperature of the light beams are in a range of about 4,000 to about 7,000 degrees Kelvin when the light source in the handle is a tungsten-halogen lamp having a colour temperature in a range of about 2,400 to about 3,400 degrees Kelvin. The light beams should have a colour rendering index of at least about 70, and preferably greater than about 90. A selector may be provided in the handle for changing the correlated colour temperature of the light beam as desired. Preferred parameters for spot and ambient lighting of a dental surgery are disclosed. Apparatus for adjusting automatically the correlated colour temperature of the light beams may be provided.

Embodiments of the invention will now be described, by way of example, with reference to the accompanying drawings, in which:
Figure 1 is a side elevational view of a miniature hand-held spot source of illumination embodying the present invention,
Figure 2 is an enlarged side elevational view of the hand-piece illustrated in Figure 1, but with portions broken away and sectioned to illustrate certain details of construction,
Figure 3 is a greatly enlarged fragmentary sectional view of a portion of the dental handpiece illustrated in Figure 2,
Figure 4 is an enlarged fragmentary longitudinal cross-sectional view of a modified embodiment of the present invention,
Figure 5 is a transverse sectional view taken on line 5-5 in Figure 4,
Figure 6 is a perspective view of a component of the modified embodiment illustrated in Figure 4,
Figure 7 is a graph illustrating certain physical relations involved in the present invention,
Figure 8 is a schematic illustration of a further modified embodiment of the present invention,
Figure 9 is a correlated colour temperature (CCT) diagram for use in determining colour temperature of any light source, including a tungsten halogen light source, and
Figure 10 is a chromaticity diagram (CRI) corresponding to the CCT diagram of Figure 9.

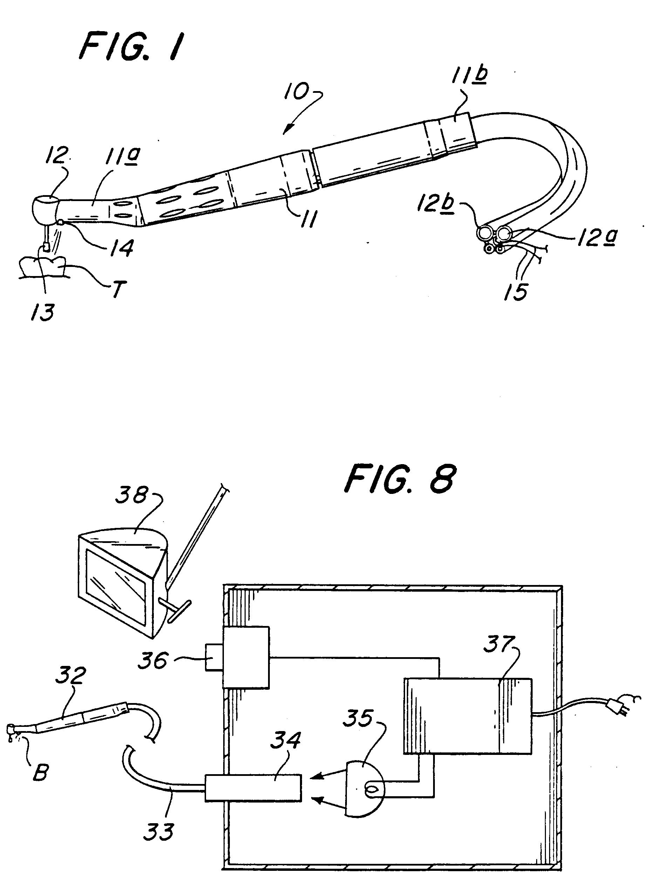

Referring now to the drawings, Figure 1 illustrates a hand-held instrument 10 for use in providing spot illumination of a work location. In the present instance, the instrument 10 is a dental handpiece which includes an elongated handle portion 11 having a proximal end portion 11a mounting an air turbine 12 for rotating either a drill or burr 13 adapted to operate on a tooth T in a conventional manner. The air supply and exhaust for the turbine 12 is provided by flexible elongated tubes 12a and 12b connected to the distal end 11b of the handle 11 and routed internally through the handle 11 in a conventional manner.

For purposes of illuminating the drill 13 and tooth T, it is known to provide the handpiece 10 with means for projecting a light beam in the region of the drill 13. To this end, the light beam projection means includes at least one, and preferably a pair of light emission ports 14 mounted in the proximal end portion 11a of the handle 11 and canted in the direction of the drill 13 so as to project light laterally in the manner illustrated in Figure 1. In the embodiment of Figure 1, the light is provided by an electrically-powered lamp carried in the handle 11 and supplied with electricity by a power cable 15 associated with the air supply and exhaust tubes 12a and 12b.

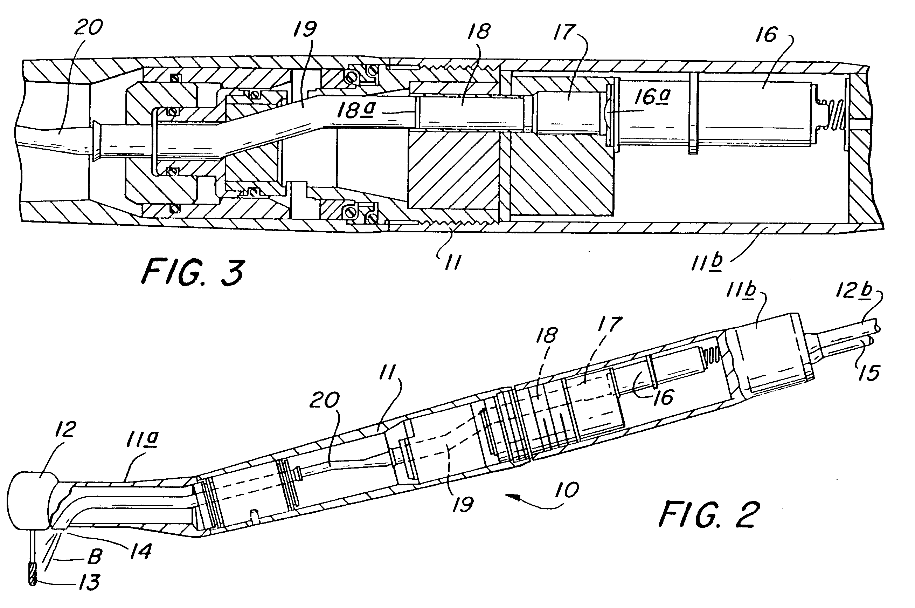

As best seen in Figure 2, the electrically-powered source of illumination includes a tungsten-halogen lamp 16 mounted adjacent to the distal end portion 11b of the handle 11 and disposed with its lamp light output lens 16a facing toward the proximal end 11a of the handle 11, see Figure 3. Light from the lamp 16 is transmitted lengthwise of the handle 11 via an optical path provided by a series of endwise disposed optically-transparent elements, including a clad rod coupling 17, an optical transmission element 18, a fused fibre optic rod 19, and bifracted optical bundles 20 terminating in the light ports 14 at the proximal end portion 11a of the handpiece 10. Thus, light generated by the lamp 16 is transmitted lengthwise of the handle 11 and projected in optical beams B onto the drill 13.

As described thus far, the construction or the dental handpiece 10 is conventional. Such construction may be found in a handpiece sold by the applicant under the Trademark STAR Model 430 SWL.

Conventionally, the tungsten filament lamp has a maximum practical operating temperature of 3,200 degrees Kelvin. This is because operation at higher temperatures reduces the lamp life to unacceptable time frames from minutes to at most only a few hours of operation. At 3,200 degrees Kelvin, however, the quality of the light emitted from the light ports 14 has a yellowish-red hue. While lamp life can be increased by reducing its operating temperature, operating at lower colour temperatures simply exacerbates the light quality problem by shifting the hue further into the yellow range. Operation at significantly higher temperatures, not only shortens the lamp life, but also increases the intensity of the light emitted from the light ports 14, and this is undesirable from the standpoint of the long term health of the eyes of the processionals using light emitted from the instrument.

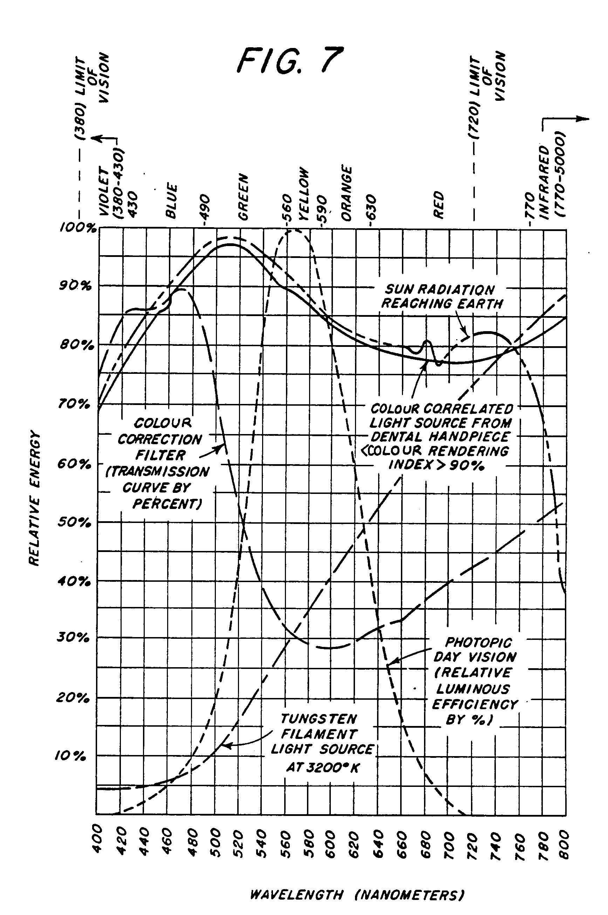

According to the present invention, a means is provided in the optical path in the handle of the dental handpiece 10 for causing the colour of the light emitted from the optical light ports 14 to have a predetermined quality. To this end, a colour correcting light filter 18a, preferably of the interference type, is provided on the optical transmission element 18 at the end thereof remote from the lamp 16. The optical filter 18a, as shown, is a so-called interference type filter, and it is provided by serial electro-deposition of layers on the optical element 18 which, in the illustrated embodiment, is a cylinder of glass composition. Specifically, the filter 18a is characterised by the colour correction filter transmission curve shown in Figure 7. The evaporation film material includes titanium oxide and quartz. The coating should also meet the durability tests for adhesion, humidity and abrasion spelled out in MIL-C-48497, paragraphs 4.5.3.1, .2 and .3, respectively.

The element 18 may, however, be of a coloured glass composition or may include a combination of coloured glass and interference layers. Thus, the filter 18a is located in the optical path between the tungsten-halogen lamp 16 and the light ports 14 at the proximal end portion of the instrument 11.

In the embodiment of Figures 2 and 3, the filter 18a is designed to filter the light from the lamp 16 so that the light beams B emitted from the light projection means 14 differ in correlated colour temperature by about 2,000 degrees Kelvin relative to the light emitted by the lamp 16. In dental surgeries where the ambient lighting and dental cavity source of illumination provides light of a yellowish hue, the filter 18a is designed to cause the light beams B to have a correlated colour temperature in a range of about 4,000 to about 7,000 degrees Kelvin. More preferably. when the lamp 16 is of the tungsten-halogen type operated in a temperature range of between about 2,400 to about 3,400 degrees Kelvin, the filter 18a is designed so that the light beams produce a correlated colour temperature of about 5,500 degrees Kelvin. Furthermore, the filter should also result in light beams B with a colour rendering index of at least about 70, and more preferably greater than about 90. The intensity of illumination at the drill location, i.e. about 13 mm (0.5 inches) from the light ports 14, should produce at least 1600 lux (150 footcandles). This results in a desirable spot source of illumination at that location of about 6.4 mm (0.25 inches) in diameter with good contrast relative to the surrounding tooth structure particularly when the light supplied to the oral cavity by the directable source has a yellowish hue, as in approximately 90 percent of the dental surgeries in the United States.

In the embodiments of Figures 2 and 3, a single optical filter 18a on the element 18 is provided to produce light of the desired quality. While the transmission element 18 can be removed from the dental handpiece and replaced should it be desired to change the colour of the light beam emitted from the light ports 14, removal and replacement would be time consuming, and hence, undesirable. Moreover, it would be necessary to keep a separate supply of elements at a different storage location, and this has the disadvantage of their either becoming damaged or lost, not to mention the inconvenience.

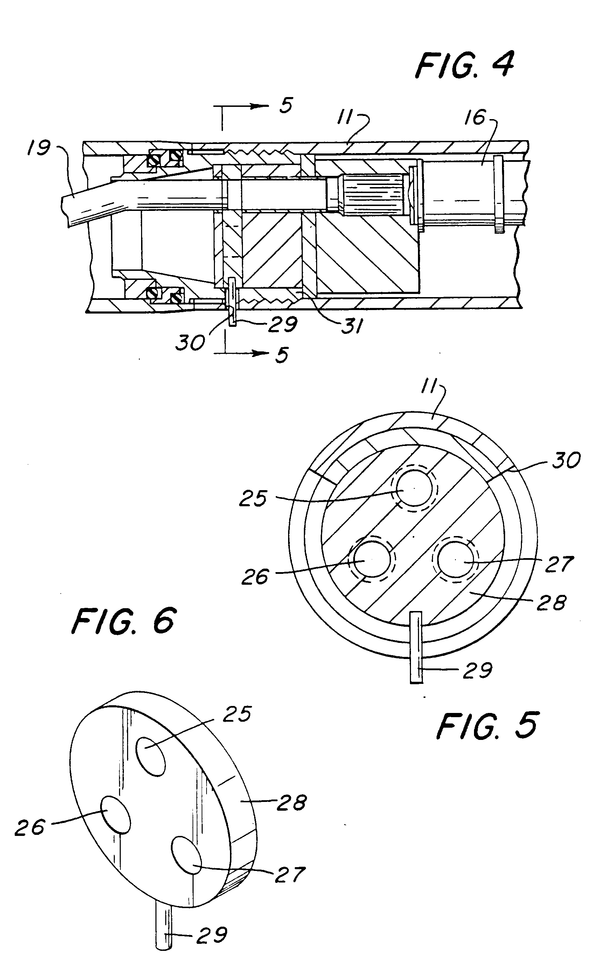

In accordance with another embodiment of the present invention a means is provided in the handle of the dental handpiece to enable filters of various construction to be selectively positioned in the optical path. To this end, the embodiment of Figures 4-6 is provided. In this embodiment, a plurality of filter elements, such as the elements 25, 26 and 27 are mounted at circumferentially spaced locations in a circular disc 28 having a selector handle 29 projecting radially downward therefrom. As best seen in Figure 4, the disc 28 is rotatably mounted for rotation about an axis extending lengthwise of the handle 11 in a cylindrical sleeve 31 threaded into the dental handpiece handle 11. The filter elements 25-27 are disposed radially relative to the rotational axis of the disc 28 so as to be capable of selectively being rotated into position in the light path between the lamp 16 and the optic rod 19. Thus, the filter element 25 may be similar in construction to the filter 18a in the aforementioned embodiment. The filter element 26 may be constructed to provide light of a different correlated colour temperature than the filter 25. The filter element 27, on the other hand, may simply include a clear glass element for those instances where a yellowish hue light might be desirable, such as when drilling in combination with application of a water mist. Thus, it should be apparent that the embodiment of Figures 4-6 enables the quality of the light emitted from the ports 14 to be adjusted to suit the particular requirements of the professional.

In the embodiments of Figures 1-6, the source of illumination is provided in the handle of the handpiece, and electrical power is supplied to the source via electrical wires 15. In such an embodiment, the intensity of the source of illumination is constant. If desired, however, suitable means may be provided for regulating the power supply to the lamp 16 for controlling the intensity of its output. Customarily, this is accomplished by providing a manually operable rheostat to adjust the power supply to the lamp 16.

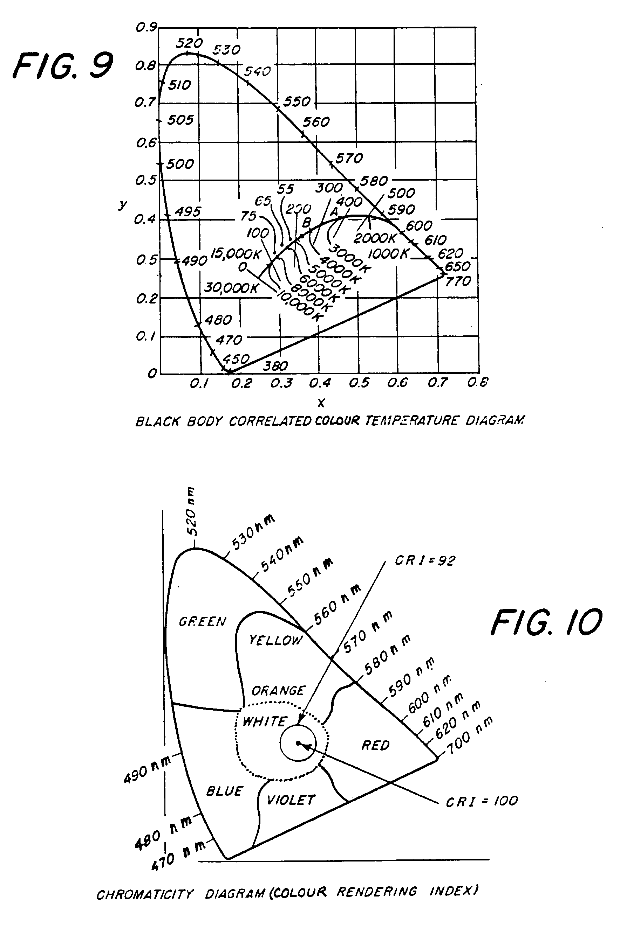

In another embodiment of the present invention, the source of illumination for the dental handpiece can be placed at a remote location. To this end, as best seen in the schematic diagram of Figure 8, (sheet 1) a dental handpiece 32 is provided with light from a source such as a tungsten-halogen lamp 35 with an elliptical reflector via an elongate optical fibre cable 33 and transition piece 34. An advantage of this construction is that it enables a variety of different types of lamps of various operating temperatures and spectra to be used to provide the light for the beams B. For instance, such sources of illumination may include metal halide gas filled arc lamps, including mercury, sodium or xenon (confined or unconfined) or combination gas filled arc lamps. In this embodiment either plural lamps or plural filters can be movably mounted into and out of registry with the transition piece 34, much like the filters are moved in the embodiment of Figures 4-6. In this embodiment, however, the lamps may be made larger in order to overcome the additional length required for this type of light delivery system.

The embodiment of Figure 8 may be modified to provide automatic adjustment of light intensity, depending upon conditions within the dental surgery. To this end, a means is provided for sensing the level of illumination produced by a separate directable illumination source 38 in the dental surgery and for automatically regulating power to the remote lamp 35. As best seen in the Figure 8 schematic, this may be accomplished by means of a photosensitive cell 36 located so as to sense the light emitted from the directable source 38 and an appropriate amplifier and control unit 37 which interconnects the cell 36 and lamp 35 and is powered by a conventional electrical supply. With this system, the level of illumination sensed by the cell 36 can be fed into the amplifier and control unit 37 which then can control the power to the lamp 35 in accordance with conventional electronic circuitry. This permits the level of illumination of the light from the handpiece 32 to be adjusted automatically in response to illumination produced by the directable source 38, thereby ensuring a desirable amount of light intensity contrast between the spot source and the generalised source in the oral cavity, such as at the relative levels noted heretofore.

The theoretical underpinnings of the present invention may best be understood by reference to the diagrams illustrated in Figures 7, 9 and 10. Figure 7 is a plot of relative visible light energy with respect to wavelength. The triple-dashed curve spanning the visible spectrum is marked "Sun Radiation Reaching Earth". Note that it peaks at a wavelength between about 500 and 520 nanometres, and falls off rapidly above about 760 nanometres. The dashed curve marked "Photopic Day Vision (relative luminous efficiency by percent)" is a typical bell-shaped curve which peaks slightly above 560 nanometres. The single-line curve marked "Tungsten Filament Light Source at 3,200° K˝ rises from a low relative energy level at shorter wavelengths, such as 400 nanometres, and increases to a relative energy level in excess of 80 percent at about 760 nanometres. The broken line curve marked "Colour Correction Filter (transmission curve by percent)" represents the relative energy passed by the filter at various wavelengths. In the present invention, the net effect of the colour correction filter on the light generated by the tungsten filament light source is the solid line curve marked "Colour Correlated Light Source From Dental Handpiece (colour rendering index greater than 90 percent)" which generally parallels in close proximity the "Sun Radiation Reaching Earth" curve over the visible spectrum of light.

Figures 9 and 10, when viewed together, indicate the shift in correlated colour temperature that results when a tungsten-halogen lamp is operated at different temperatures. For instance, operation at temperatures lower than 3,200 degrees Kelvin shifts the hue to the red and infrared portion of the spectrum. Operation at temperatures higher than 5,500 degrees Kelvin produces white light and a colour rendering index greater than 90. Operation at about 4,000 degrees Kelvin shifts the hue so that the light has a colour rendering index of greater than about 70.

The referenced curves are applicable to tungsten filament lamps. If arc type lamps were used in place of tungsten filament lamps, such as described heretofore with respect to the embodiment of Figure 8, it might be necessary to reduce the colour correlated temperature of the light beams B, rather than increasing it, because such lamps have substantially different light output spectra requiring different colour correction filter transmission curves.

In view of the foregoing, it should be apparent that the present invention provides a miniature spot source of illumination particularly suited for use in combination with a dental handpiece to improve the visual efficiency of the health professional. By causing the colour of the spot source to have a correlated colour temperature of about 5,500 degrees Kelvin with a colour rendering index of greater than 90 a type of white light source is provided to maximise the stimulation of all specialised colour sensitive cones in the eye, particularly those cones in the eye detail focusing area in the fovea of the retina. This enables the intensity of the light required to observe details to be reduced, because there is a greater stimulation of the total specialised cone population in the eye. Reduction in light intensity is desirable to minimise possible eye damage that might occur when the eye is subjected to intense illumination for prolonged periods of time. As a result, the present invention functions to minimise declines in long-term visual efficiency and overall eye health. This is accomplished, moreover, without adversely affecting the perception by the health professional of a decrease in the level of illumination. Furthermore, by supplying a complete visible spectrum in a spot source in the oral cavity, the concentration or strength of the reflected colour is improved. This same colour corrected light source provides a useful means to compare natural teeth to artificial teeth when shade matching is required.

While a preferred method and apparatus has been described in detail, various modifications, alterations and changes may be made within the scope of the present invention as defined in the following claims.

## Claims

1. A hand-held instrument (10, 32) for use in combination with an overall illumination for providing an auxiliary spot source of illumination of a work location (T) in a body cavity, comprising handle means (11) having a proximal end portion (11a) adapted to be positioned adjacent to said work location (T), light projection means (14) located on said handle means adjacent to said proximal end portion for projecting at least one beam of light (B) toward said work location, and means (16, 35) carried by said handle means for providing a source of the light emitted from said light projection means (14) which includes filter means (18a, 25-27) carried by said handle means (11) in an optical path between said light source and said projecting means (14) for causing the light beam to have a correlated colour temperature difference relative to the correlated colour temperature of said overall illumination, characterised in that said optical filter means causes said light beam (B) to have a correlated colour temperature in a range of about 4000 to about 7000 degrees Kelvin, said spot source of illumination providing a discrete region of illumination which is smaller than the region of illumination provided by said overall illumination and which is also of a proper colour rendering index to cause maximum stimulation of the fovea of the eye of the user when viewing the body cavity under both sources of illumination, said optical filter means causing said light beam to have a colour rendering index of at least 70.

2. A hand-held instrument according to claim 1, characterised in that said overall illumination is provided by a tungsten filament lamp operable in a temperature range of about 2400 to about 3400 degrees Kelvin.

3. An instrument according to any one preceding claim, characterised in that said filter means includes an optical element (18) having either an optical coating (18a) or colour composition or combination of a coating and colour composition mounted in said handle means (11) and disposed in a light path between said light source (16) and said projection means (14).

4. An instrument according to claim 1 or claim 2, characterised in that said light projection means (14) includes an electrically powered lamp (16) mounted in said handle means (11) remote from said proximal end portion (11a) thereof.

5. An instrument according to any one preceding claim, characterised in that said filter means includes selector means (28, 29) carried by said handle means (11) and operable externally thereof for moving said filter means (25, 26, 27) relative to said light source means for changing the correlated colour temperature of the light emitted by said projector means (14).

6. An instrument according to claim 5, characterised in that said light source (16) is stationary in said handle means (11) and said selector means (28, 29) includes a plurality of filter elements (25-27) selectively displaceable into and out of said light path.

7. An instrument according to claim 6, characterised in that said selector means (28, 29) includes a barrel rotatable about an axis extending lengthwise of said handle means (11) and mounting said filter elements (25-27) at circumferentialiy spaced locations.

8. An instrument according to claim 1, characterised in that said light source (35) is located separate from said handle means (11) and light from said source is transmitted into said handle means via at least one optical fibre (33).

9. A hand-held instrument according to any one preceding claim, characterised in that said overall illumination has a correlated colour temperature of about 3200 degrees Kelvin, said filter means provides said light beam with a correlated colour temperature of about 5500 degrees Kelvin and a colour rendering index of at least about 90.

10. An instrument according to any one preceding claim, including a tool (13) mounted on said proximal end portion (11a) for operating in an oral cavity, characterised in that said projection means (14) casts said light beam (B) onto said tool (13).

11. A method of illuminating a body cavity in a surgery having a directable source (38) of generalized artificial illumination providing visible ambient light of a predetermined colour temperature and a hand-held spot source (32) of artificial illumination for enabling a health professional to view the cavity in a patient's anatomy, said hand-held spot source providing at least one beam (B) of visible light of a predetermined correlated colour temperature, and means is provided to filter said visible light before being projected from said hand-held spot source to cause said beam (B) to have a correlated colour temperature difference relative to the correlated colour temperature of said generalized directable light source (38), characterised in that said light beam (B) has a correlated colour temperature in a range of 4000 to 7000 degrees Kelvin relative to the correlated colour temperature of said generalized directable light source (38) thereby minimising long term eye damage to the health professional, and said filter causing said light beam to have a colour rendering index of at least 70.

12. A method according to claim 11, characterised in that said beam of visible light has a correlated colour temperature in a range of 2400 to 3400 degrees Kelvin.

13. A method according to claim 11 or 12, characterised in that said directable source (38) of generalized artificial illumination provides a predetermined level of light on a patient's oral cavity and anatomy, and said light beam (B) provided by said hand-held source has a level of light intensity in lumens which is about one to three times the level of light intensity of said directable generalized source.

14. A method according to claim 11, 12 or 13, characterised in that means is provided to sense the level of illumination in said surgery and automatically control the correlated colour temperature of said light beam (B) in response to the sensed level of illumination.

## Patentansprüche

1. Mit der Hand haltbares Instrument (10, 32) zur Verwendung in Verbindung mit einer Umgebungsbeleuchtung zur Schaffung einer zusätzlichen Punktbeleuchtungsquelle auf einem Arbeitsplatz (T) in einer Körperhöhle, umfassend eine Handgriffseinrichtung (11) mit einem proximalen Endteil (11a), welcher zum Positionieren gegenüber dem Arbeitsplatz (T) angepaßt ist, eine Lichtprojektionseinrichtung (14), die auf der Handgriffseinrichtung benachbart zum proximalen Endteil zum Projizieren mindestens eines Lichtstrahles (B) auf den Arbeitsplatz positioniert ist, und eine Einrichtung (16, 35), die von der Handgriffseinrichtung getragen wird und eine Quelle des von der Lichtprojektionseinrichtung (14) emittierten Lichts erzeugt, welche eine von der Handgriffseinrichtung (11) getragene Filtereinrichtung (18a, 25-27) in einem optischen Strahlengang zwischen der Lichtquelle und der Projektionseinrichtung (14) einschließt, wodurch der Lichtstrahl eine korrelierte Farbtemperaturdifferenz relativ zur korrelierten Farbtemperatur der Umgebungsbeleuchtung aufweist, **dadurch gekennzeichnet**, daß die optische Filtereinrichtung bewirkt, daß der Lichtstrahl (B) eine korrelierte Farbtemperatur in einem Bereich von ungefähr 4000 bis ungefähr 7000 Grad Kelvin aufweist, die Punktbeleuchtungsquelle einen diskreten Beleuchtungsbereich schafft, der kleiner ist als der von der Umgebungsbeleuchtung erzeugte Bereich und welcher einen geeigneten Farbwiedergabeindex aufweist, der eine maximale Stimulierung der Fovea des Benutzerauges bewirkt, wenn die Körperhöhle unter beiden Beleuchtungsquellen betrachtet wird und die optische Filtereinrichtung bewirkt, daß der Lichtstrahl einen Farbwiedergabeindex von mindestens 70 aufweist.

2. Mit der Hand haltbares Instrument nach Anspruch 1, dadurch gekennzeichnet, daß die Umgebungsbeleuchtung von einer Wolframfadenlampe erzeugt wird, die in einem Temperaturbereich von ungefähr 2400 bis ungefähr 3400 Grad Kelvin betrieben wird.

3. Instrument nach einem der vorherigen Ansprüche, dadurch gekennzeichnet, daß die Filtereinrichtung ein optisches Element (18) einschließt, das entweder eine optische Beschichtung (18a) oder eine Farbzusammensetzung oder eine Kombination einer Beschichtung und einer Farbzusammensetzung hat, die in der Handgriffseinrichtung (11) angebracht ist und in einem Strahlengang zwischen der Lichtquelle (16) und der Projektionseinrichtung (14) angeordnet ist.

4. Instrument nach Anspruch 1 oder Anspruch 2, dadurch gekennzeichnet, daß die Lichtprojektionseinrichtung (14) eine elektrisch betriebene Lampe (16) einschließt, die in der Handgriffseinrichtung (11) entfernt vom proximalen Endteil (11a) angebracht ist.

5. Instrument nach einem der vorherigen Ansprüche, dadurch gekennzeichnet, daß die Filtereinrichtung eine Auswahleinrichtung (28, 29) einschließt, die von der Handgriffseinrichtung (11) getragen wird und extern davon betätigbar ist, um die Filtereinrichtung (25, 26, 27) relativ zur Lichtquelleneinrichtung zum Ändern der korrelierten Farbtemperatur des von der Projektionseinrichtung (14) ausgesendeten Lichts zu bewegen.

6. Instrument nach Anspruch 5, dadurch gekennzeichnet, daß die Lichtquelle (16) stationär in der Handgriffseinrichtung (11) ist und die Auswahleinrichtung (28, 29) eine Vielzahl von Filterelementen (25-27) einschließt, die wahlweise in und aus dem Strahlengang verlagerbar sind.

7. Instrument nach Anspruch 6, dadurch gekennzeichnet, daß die Auswahleinrichtung (28, 29) einen Zylinder einschließt, der um eine sich in Längsrichtung der Handgriffseinrichtung (11) erstreckenden Achse drehbar ist, und der die Filterelemente (25-27) an am Umfang im Abstand angeordneten Stellen trägt.

8. Instrument nach Anspruch 1, dadurch gekennzeichnet, daß die Lichtquelle (35) getrennt von der Handgriffseinrichtung (11) gelegen ist und daß Licht aus dieser Quelle mittels zumindest einer Lichtleitfaser (33) in die Handgriffseinrichtung übertragen wird.

9. Mit der Hand haltbares Instrument nach einem der vorherigen Ansprüche, dadurch gekennzeichnet, daß die Umgebungsbeleuchtung eine korrelierte Farbtemperatur von ungefähr 3200 Grad Kelvin hat, die Filtereinrichtung den Lichtstrahl mit einer korrelierten Farbtemperatur von ungefähr 5500 Grad Kelvin und einem Farbwiedergabeindex von mindestens ungefähr 90 erzeugt.

10. Instrument nach einem der vorherigen Ansprüche, welches ein auf dem proximalen Endteil (11a) angebrachtes Werkzeug (13) zum Arbeiten in einer Mundhöhle einschließt, dadurch gekennzeichnet, daß die Projektionseinrichtung (14) den Lichtstrahl (B) auf das Werkzeug (13) wirft.

11. Verfahren zur Beleuchtung einer Körperhöhle in einer Behandlung mit einer ausrichtbaren Quelle (38) einer verallgemeinerten künstlichen Beleuchtung, welche ein sichtbares Umgebungslicht einer vorbestimmten Farbtemperatur schafft, und einer mit der Hand haltbaren Punktquelle (32) künstlicher Beleuchtung, um es einem Gesundheitsbediensteten zu ermöglichen, die Höhle in der Anatomie des Patienten zu sehen, wobei die mit der Hand haltbare Punktquelle zumindest einen Strahl (B) sichtbaren Lichts einer vorbestimmten korrelierten Farbtemperatur schafft und eine Einrichtung zum Filtern des sichtbaren Lichts vor dem Abstrahlen von der mit der Hand haltbaren Punktquelle geschaffen wird, um den Strahl (B) auf eine korrelierte Farbtemperaturdifferenz relativ zur korrelierten Farbtemperatur der verallgemeinerten ausrichtbaren Lichtquelle (38) zu bringen, dadurch gekennzeichnet, daß der Lichtstrahl (B) eine korrelierte Farbtemperatur in einem Bereich von 4000 bis 7000 Grad Kelvin relativ zur korrelierten Farbtemperatur der verallgemeinerten ausrichtbaren Lichtquelle (38) hat, um dadurch Langzeit-Augenschäden der Gesundheitsbediensteten zu minimieren, und der Filter den Lichtstrahl auf einen Farbwiedergabeindex von zumindest 70 bringt.

12. Verfahren nach Anspruch 11, dadurch gekennzeichnet, daß der Lichtstrahl sichtbaren Lichts eine korrelierte Farbtemperatur in einem Bereich von 2400 bis 3400 Grad Kelvin hat.

13. Verfahren nach Anspruch 11 oder 12, dadurch gekennzeichnet, daß die ausrichtbare Quelle (38) der verallgemeinerten künstlichen Beleuchtung einen vorherbestimmten Lichtpegel in der Mundhöhle und Anatomie eines Patienten schafft und daß der Lichtstrahl (B), der durch die mit der Hand haltbare Quelle bereitgestellt wird, einen Pegel der Lichtintensität in Lumen hat, der ungefähr ein- bis dreimal der Pegel der Lichtintensität der ausrichtbaren, verallgemeinerten Quelle ist.

14. Verfahren nach Anspruch 11, 12 oder 13, dadurch gekennzeichnet, daß ein Mittel geschaffen wird, den Beleuchtungspegel bei der Behandlung festzustellen und automatisch die korrelierte Farbtemperatur des Lichtstrahls (B) als Folge des festgestellten Beleuchtungspegels zu regeln.

## Revendications

1. Instrument à main (10, 32) utilisé en combinaison avec un éclairage généralisé pour procurer une source auxiliaire d'éclairage par spot d'un champ opératoire (T) dans une cavité du corps, comprenant des moyens formant poignée (11) munis d'une partie d'extrémité proximale (11a) agencée pour être positionnée à proximité dudit champ opératoire (T), des moyens de projection de lumière (14) disposés sur lesdits moyens formant poignée adjacents à ladite partie d'extrémité proximale pour projeter au moins un faisceau lumineux (B) vers ledit champ opératoire, et des moyens (16, 35) supportés par lesdits moyens formant poignée pour fournir une source de la lumière émise desdits moyens de projection de lumière (14) oui incluent des moyens formant filtre (18a, 25-27) supportés par lesdits moyens formant poignée (11) dans un trajet optique entre ladite source de lumière et lesdits moyens de projection (14) pour inciter le faisceau lumineux à produire une différence de température de couleur corrélative par rapport à la température de couleur corrélative dudit éclairage généralisé, caractérisé en ce que lesdits moyens formant filtre optique incitent ledit faisceau lumineux (B) à produire une température de couleur corrélative dans une gamme d'environ 4000 à environ 7000 degrés Kelvin, ladite source d'éclairage par spot fournissant une zone d'éclairage discrète qui est plus petite que la zone d'éclairage fournie par ledit éclairage généralisé et qui a aussi un indice de rendu de couleur adéquat pour provoquer une stimulation maximum de la fovéa de l'oeil de i'utilisateur lorsqu'il examine la cavité du corps grâce aux deux sources d'éclairage, lesdits moyens formant filtre incitant ledit faisceau lumineux à prendre un indice de rendu de couleur d'au moins 70.

2. Instrument à main selon la revendication 1, caractérisé en ce que ledit éclairage généralisé est fourni par une lampe à filament de tungstène pouvant fonctionner dans une gamme de température d'environ 2400 à environ 3400 degrés Kelvin.

3. Instrument selon l'une quelconque des revendications précédentes, caractérisé en ce que lesdits moyens formant filtre incluent un élément optique (18) muni soit d'un revêtement optique (18a) soit d'une composition de couleurs soit d'une combinaison d'un revêtement et d'une composition de couleurs montés dans lesdits moyens formant poignée (11) et disposés dans un trajet lumineux entre ladite source lumineuse (16) et lesdits moyens de projection (14).

4. Instrument selon la revendication 1 ou la revendication 2, caractérisé en ce que lesdits moyens de projection de lumière (14) incluent une lampe à alimentation électrique (16) montée dans lesdits moyens formant poignée (11) à distance de ladite partie d'extrémité proximale (11a) de ceux-ci.

5. Instrument selon l'une quelconque des revendications précédentes, caractérisé en ce que lesdits moyens formant filtre incluent des moyens formant sélecteur (28, 29) supportés par lesdits moyens formant poignée (11) et pouvant être actionnés à l'extérieur de ceux-ci pour déplacer lesdits moyens formant filtre (25, 26, 27) par rapport auxdits moyens formant source lumineuse afin de changer la température de couleur corrélative de la lumière émise par lesdits moyens formant projecteur (14).

6. Instrument selon la revendication 5, caractérisé en ce que ladite source lumineuse (16) est fixe dans lesdits moyens formant poignée (11) et que lesdits moyens formant sélecteur (28, 29) comprennent une pluralité d'éléments de filtre (25-27) susceptibles d'être déplacés sélectivement vers l'intérieur et vers l'extérieur dudit trajet lumineux.

7. Instrument selon la revendication 6, caractérisé en ce que lesdits moyens formant sélecteur (28, 29) comprennent un cylindre susceptible de tourner autour d'un axe s'étendant dans le sens longitudinal desdits moyens formant poignée (11) et supportant lesdits éléments de filtre (25-27) dans des emplacements espacés périphériquement.

8. Instrument selon la revendication 1, caractérisé en ce que ladite source lumineuse (35) est disposée indépendamment desdits moyens formant poignée (11) et que la lumière de ladite source est transmise dans lesdits moyens formant poignée par l'intermédiaire au moins d'une fibre optique (33).

9. Instrument à main selon l'une quelconque des revendications précédentes, caractérisé en ce que ledit éclairage généralisé a une température de couleur corrélative d'environ 3200 degrés Kelvin, que lesdits moyens formant filtre transmettent ledit faisceau lumineux avec une température de couleur corrélative d'environ 5500 degrés Kelvin et un indice de rendu de couleur d'au moins 90 environ.

10. Instrument selon l'une quelconque des revendications précédentes, comprenant un outil (13) monté sur ladite partie d'extrémité proximale (11a) pour être utilisé dans une cavité buccale, caractérisé en ce que lesdits moyens de projection (14) dirigent ledit faisceau lumineux (B) sur ledit outil (13).

11. Méthode d'éclairage d'une cavité du corps dans un cabinet de consultation comprenant une source orientable (38) d'éclairage artificiel généralisé donnant une lumière ambiante visible d'une température de couleur prédéterminée et une source d'éclairage artificiel par spot à main (32) pour permettre à un professionnel de santé d'examiner la cavité de l'anatomie d'un patient, ladite source de spot à main fournissant au moins un faisceau (B) de lumière visible d'une température de couleur corrélative prédéterminée, et des moyens sont prévus pour filtrer ladite lumière visible avant qu'elle ne soit projetée de ladite source de spot à main pour amener ledit faisceau (B) à une différence de température de couleur corrélative par rapport à la température de couleur corrélative de ladite source lumineuse orientable généralisée (38), caractérisée en ce que ledit faisceau lumineux (B) a une température de couleur corrélative dans une gamme de 4000 à 7000 degrés Kelvin par rapport à la température de couleur corrélative de ladite source lumineuse orientable généralisée (38) de manière à minimiser ainsi la détérioration à long terme de la vue du professionnel de santé, et ledit filtre amenant ledit faisceau lumineux à prendre un indice de rendu de couleur d'au moins 70.

12. Méthode selon la revendication 11, caractérisée en ce que ledit faisceau de lumière visible a une température de couleur corrélative dans une gamme de 2400 à 3400 degrés Kelvin.

13. Méthode selon la revendication 11 ou 12, caractérisée en ce que ladite source d'éclairage artificiel généralisé orientable (38) donne un niveau prédéterminé de lumière sur la cavité buccale et l'anatomie d'un patient, et que ledit faisceau lumineux (B) fourni par ladite source à main possède un niveau d'intensité lumineuse en lumens qui est d'environ une à trois fois le niveau d'intensité lumineuse de ladite source généralisée orientable.

14. Méthode selon la revendication 11, 12 ou 13, caractérisée en ce qu'il est prévu des moyens pour détecter le niveau d'éclairage dans ledit cabinet de consultation et pour régler automatiquement la température de couleur corrélative dudit faisceau lumineux (B) en réponse au niveau d'éclairage détecté.
